# EUROPEAN PATENT APPLICATION

(11) **EP 2 886 333 A1**
(43) Date of publication of application: **24.06.2015**
(21) Application number: 13197785.2
(22) Date of filing: 17.12.2013
(51) Int. Cl.: B32B 15/08, B32B 15/082, B32B 15/085, B32B 15/20, B32B 27/08, B32B 27/10, B32B 27/30, B32B 27/32

(54) **A PACKAGING MATERIAL AND PACKAGING CONTAINERS MADE THEREFROM**

(71) Applicant: Tetra Laval Holdings & Finance SA, 1009 Pully (CH)
(72) Inventor: Andersson, Thorbjörn, 24736 Södra Sandby (SE); Sickert, Lars, 21424 Malmö (SE); Stridsberg, Thomas, 21618 Limhamn (SE)
(74) Representative: Tetra Pak - Patent Attorneys SE

(57) **Abstract**

The present invention relates to a packaging material, a packaging container obtained there from and a method for manufacturing the material.

## Description

### TECHNICAL FIELD

The present invention relates to a packaging material and a container prepared therefrom wherein the material has an improved carbon footprint compared to conventional packaging materials for food packaging.

### BACKGROUND

Environmental impact of products and in particular in product packaging is of concern. One environmental concern for consumers, and consequently for manufacturers, is global warming and the greenhouse gases that contribute to global warming. Greenhouse gases are of concern and are involved in global warming. Carbon dioxide (CO₂) has been singled out as the largest component of the collection of greenhouse gases in the atmosphere. For example, the level of atmospheric CO₂ has increased by approximately 50 percent in the last two hundred years. The increasing amount of CO₂ introduced into the atmosphere by fossil fuel-based materials is believed to be a large contributor to the greenhouse gas effect. It is thus of concern not to increase the CO₂ in the atmosphere. Organic products composed of carbon molecules from renewably based sources, such as plant sugars and starches, are considered to not further contribute to the greenhouse effect compared to the same organic molecules that are petroleum or fossil fuel based. Conventionally polyethylene is produced from the ingredient or monomer is ethylene (derived from modifying natural gas (a methane, ethane, propane mix) or from the catalytic cracking of crude oil into gasoline).

### SUMMARY

It is an object to provide a packaging material having a reduced CO₂ effect on the atmosphere.

An object is to provide a packaging material for producing packaging containers for liquid or semi-liquid food wherein the packaging material comprises at least a decor layer, on one side having a paper or paperboard layer which on the side opposite the decor layer has a heat-sealing layer, wherein the packaging material has a biobased carbon content of at least 80 %. In some aspects the packaging material has a biobased carbon content of at least 85 %, such as at least 90 % such as at least 95 %. In some aspects the packaging material additionally comprises a barrier layer arranged between the paperboard layer and the heat-sealing layer. In some aspects the packaging material additionally comprises a laminate layer arranged between the barrier layer and the paperboard layer. In some aspects the packaging material additionally comprises an adhesive (arranged between the heat-sealing layer and the barrier layer).

An object is to provide a packaging material wherein one or more in the group consisting of decor layer, laminate layer and heat-sealing layer has a biobased carbon content of at least 50 % as determined in accordance with ASTM-D6866-12.

An object is to provide a packaging container made from a packaging material as described herein above. In some aspects the packaging container is selected from the group consisting of brick shaped packaging container; gable top packaging container; wedged-shape packaging container; square-, rectangular- or octagonal-based packaging containers having a slanted top. In some aspect the packaging container comprises an opening device.

### DESCRIPTION OF THE DRAWINGS

Further advantages and favorable characterizing features will be apparent from the following detailed description, with reference to the appended figures, in which:
Fig. 1 is a cross-sectional view of a laminated packaging material according to aspects described herein.
Fig.2a shows an example of a packaging container produced from the packaging material according to embodiments described herein,
Fig. 2b shows a second example of a packaging container produced from the packaging material according to embodiments described herein, and
Fig. 3 shows the principle of how such packaging containers are manufactured from the packaging material in a continuous forming, filling and sealing process.

### DETAILED DESCRIPTION OF EMBODIMENTS

The present application thus relates to packaging containers (for liquid or semi-liquid food products) having substantially less environmental effect, such as reduced CO₂ footprint.

The present application relates to a packaging material prepared using substantial amounts of plastic materials, such as thermoplastic materials which have been manufactured using renewable raw material. The renewable raw material is a material from which ethanol can be extracted. Ethanol is used to produce ethylene which is one common monomer used to produce many plastic materials, e.g. polyethylene. Ethanol can be extracted from from agricultural feedstock. It can be made from very common crops such as sugar cane, potato, manioc and corn or from cellulosic ethanol production. Ethylene produced from ethanol obtained from for example crops thus have a ¹⁴C-content. Thus when producing plastics such as polyethylene, such as LDPE, MDPE, HDPE, LLDPE, mLLDPE etc, from ethylene comprising the ¹⁴C can be of a mean of reducing the carbon footprint, i.e. it would render the resulting plastic material not increasing the CO₂ content in the atmosphere. Replacing one of the conventionally (not from renewable source) used plastic with another (for example one from a renewable source) in the liquid or semi-liquid food packaging industry can inadvertently affect downstream processes and is thus not a simple implementation. Aspects and embodiments described herein are thus concerned with providing packaging materials for liquid or semi-liquid food having an improved environmental profile. Additionally it is within the scope to produce a plastic material such as a thermoplastic polyolefin material to replace existing materials in liquid or semi-liquid food packages comprising a paper or paperboard layer. The packaging material will contribute less to the increase of the CO₂ content in the atmosphere. The application is generally concerned with producing a packaging container for liquid or semi-liquid food product by using polyethylene having a biobased carbon content of at least 50 % in one or more layer(s) of the laminated packaging material.

In one embodiment the packaging material comprises an outer layer of a thermoplastic heat-sealable material, for example LDPE having a biobased carbon content of at least 50 %, such as at least 60 %, such as at least 70 %, such as at least 80 %, such as at least 90 % such as at least 91 % such as at least 92 %, such as at least 93 %, such as at least 94 %, such as at least 95 %, such as at least 96 %.

About 99 percent of the carbon in the Earth's biosphere is carbon-12 (¹²C). One percent of the carbon in the Earth's biosphere is substantially comprised of carbon-13 (¹³C) with trace amounts of ¹⁴C being present. When ¹⁴C is present in organic molecules that degrade and produce CO₂ these do not contribute to global warming, i.e. as there is not a net increase in the amount of carbon emitted into the biosphere. Fossil fuel does not include ¹⁴C, but instead comprises ¹²C. Hence products obtained from fossil fuel contributes to global warming by increasing the amount of carbon in the atmosphere. Testing methods that include isotope ratio mass spectrometry analysis enable the amount of green carbon in a material to be assessed, one example thereof is ASTM-D6866-12, which is built on the same concepts as radiocarbon dating, but without the use of age equations. The analysis includes deriving a ratio of the amount of radiocarbon (¹⁴C) in an unknown sample to that of a modern reference sample. The ratio is reported as a percentage having the units of percent modern carbon (pMC). For example, if the material being analyzed is a mixture of present day ¹⁴C and fossil carbon, then the pMC value obtained directly correlates to the amount of biobased carbon content present in the sample. It is common practice to detect the carbon isotopes in material. The modern reference sample used in radiocarbon dating is a standard reference material of the National Institute of Standards and Technology having a known radiocarbon content approximately equivalent to the year 1950. The 1950 reference represents 100 pMC, and the values in 2010 are approximately 107 pMC. Combining fossil carbon with radiocarbon into a blended material results in a dilution of the pMC content.

According to one object a laminated packaging material is provided comprising a decor layer (11) which on one side of the layer has bulk layer (12), such as a fibrous bulk layer, such as a paper or paperboard layer, which on the side opposite the decor layer (11) has a laminate layer (13), which on the side opposite the paper or paperboard layer (12) has an oxygen barrier (14), which on the side opposite the laminate layer (13) optionally has an adhesive (15), wherein the adhesive (15) on the side opposite the oxygen barrier (14) has a heat-sealable layer (16).

Laminated packaging materials are obtained by various methods for laminating layers together, such as extrusion lamination, dry adhesive lamination, heat-pressure lamination, and may also be including various coating methods. Although to achieve the benefits described herein the particular lamination technique is not crucial, it will however be of particular use in extrusion lamination to produce laminated packaging materials, in particular carton-based packages used for food such as liquid and semi-liquid food.

Using the above described techniques to develop gives packaging containers having a long shelf-life is provided, the shelf-life is not less than 3, 6, 8, 9, 10, 11, 12, 13, 14, 15 months. Naturally long shelf-life is preferred. Generally a shelf life of at least 9 months are required of containers for liquid food. In one aspect a packaging container made from the packaging laminate according to the present invention has a shelf-life of 12 months or more.

In particular, such a laminated packaging material comprising a paper or paperboard bulk layer is provided. The paper or paperboard bulk layer is arranged to provide for the greatest contribution to the flexural rigidity of the laminate. In embodiments where the bulk layer is a paper or paperboard used herein has a grammage between 60-480 g/m², depending on the requirement for different types of packages. The grammage of the paperboard is assessed in accordance ISO 536. Grammage expresses weight per unit area and is measured in g/m². The paper or paperboard normally has a thickness between 80-660 µm, and is appropriately selected in order to obtain the desired stiffness suitable for the type of packaging container and the intended food product. The bulk layer thickness can be assessed by microscopy as discussed herein below.

It is however also conceivable that the bulk layer of the packaging laminate instead is a polyolefin bulk layer, made e.g. of polyethylene, polypropylene or copolymers of ethylene or propylene, such as, for example, ethylene-propylene, ethylene-butene, ethylene-hexene, ethylene-alkyl(meth)-acrylate or ethylene-vinyl acetate copolymers, or PET (polyethylene terephthalate) bulk layer. The choice of the material for a bulk layer may provide for a transparent packaging laminate, to be used e.g. in a transparent pouch for food. In some embodiments of the present invention the bulk layer is paper or paperboard.

The packaging material in some embodiments comprise a bulk layer of paper or paperboard (i.e. carton) optionally having a decor layer i.e. to be the outer side of the filled and sealed packaging container. The side of the bulk layer, e.g. paper or paperboard, which is to be the outer side of the closed and sealed packaging container can contain a print covered by the decor layer, optionally the print may be on the plastic. The decor layer is a polyolefin layer such as the above mentioned outermost heat-sealable polyolefin layer in contact with the surroundings, for example LDPE or polypropylene. The decor layer provides additional protection and stability to the packaging container and in some embodiments is heat-sealable.

The bulk layer may be treated or coated in order to improve compatibility between the layers, and/or to obtain additional desired properties such as improved rigidity. The bulk layer may be of a thickness between 80-660 µm, such as 90-110 µm and 200-500 µm, such as 250-350 µm. Expressed in g/m² a suitable interval is 67 - 450 g/m². The paper of paperboard may contain coatings such as for example clay coating.

The decor layer is a heat-sealable polyolefin layer(s) facing the surrounding environment of a resulting packaging container, suitable polyolefins are polyethylene of the low density type, selected from the group consisting of LDPE, LLDPE, VLDPE, ULDPE or mLLDPE and blends of two or more thereof, optionally other polyolefins such as high density polyethylene (HDPE), polypropylene or propylene co- or ter-polymers are useful as the layer facing the surroundings. The decor layer may be applied by extrusion coating or other similar techniques such as those disclosed above. Optionally the decor layer may be a pre-made film which is laminated to the bulk layer. Suitable example of a polyethylene to be used as a decor layer is a LDPE of extrusion grade, for example having a LDPE having a melt flow index (as determined in accordance with ASTM D1238, 190 °C/2.16 kg) of 4-15, such as 6-9, and a density (as determined in accordance with ISO 1183, method D) of 915-922 kg/m³, such as 918-920 kg/m³ In one aspect the decor layer is a LDPE having a biobased carbon content of at least 50 % such as at least 70 % such as at least 80 % such as at least 90 % such as at least 95 %. In one aspect the decor layer has a biobased carbon content of 100 %. The thickness of decor layer of the packaging material is between 5 µm-50 µm such as 7 µm-30µm, such as 7 µm-20 µm, such as 8 µm - 15 µm. Opposite the optional decor layer and hence facing the inside of the final packaging container a oxygen barrier is arrange by help of a laminate layer which could be a polyolefin-based layer or another suitable layer such as a polyolefin, such as a suitable LDPE which facilitates adhesion between the bulk layer and the oxygen barrier. In some embodiments the oxygen barrier is an aluminium foil. When an aluminium foil is used a suitable thickness is between 3-15 µm, such as 5-10 µm, such as 5-8 µm. Suitable LDPE facilitating adhesion are for example manufactured by Dow, Exxon Mobile, Borealis, and Ineos etc, such grades are well known to the skilled person. Generally LDPEs suitable for extrusion may for example have a MFI of 2-13 and a density of 914-922.

The laminate layer is in an embodiment of the invention applied by an extrusion process using commercially available extrusion equipment. Materials, suitable as laminate layer, are known and conventionally comprise a polyolefin. According to one embodiment of the invention, the laminating material comprises a polyethylene or blends thereof. Within the group of polyethylenes, the properties of the laminating layer can be varied and tailored in order to achieve various final properties in a packaging laminate. Variations of the laminate layer for the desired type of packaging material for liquid and semi-liquid foods are thus found largely within the group of polyethylene polymers. This group thus also includes copolymers of ethylene and other alpha-olefin monomers which of course include, for example, linear low-density polyethylenes, also copolymers of ethylene and propylene in different proportions, for example so-called plastomers or elastomers of the type marketed by Dow under the names "Engage" and "Affinity", and also terpolymers of ethylene, propylene and an alpha-olefin monomer having polyethylene-like properties. Examples of polymers that can help to improve various mechanical properties are what are called linear polymers, such as linear polyolefins, for example high-density polyethylene (HDPE), medium-density polyethylene (MDPE), linear low-density polyethylene (LLDPE/VLDPE/ULDPE) produced with conventional catalysts or with so-called single-site catalysts, or constrained-geometry catalysts, including so-called metallocene-LLDPE (mLLDPE), and polypropylene (PP). Very low density polyethylene (VLDPE) and ultra low density polyethylene (ULDPE) are examples of subcategories within the category of linear low density polyethylenes. Depending on the type and quantity of comonomer, these polymers generally have greater durability in several respects. Variations of the laminating material for the desired type of packaging material for beverages and liquids are found within the group of polyethylene polymers, for example polymers chosen from the group that includes low-density polyethylene (LDPE), high-density polyethylene (HDPE), medium-density polyethylene (MDPE), linear low-density polyethylene (LLDPE/VLDPE/ULDPE) produced with conventional catalysts or with so-called single-site catalysts, or constrained-geometry catalysts, including so-called metallocene-LLDPE (mLLDPE), and mixtures or blends thereof; and polypropylene or propylene co- or ter-polymers. One example of a suitable laminate layer is a polyethylene, for example LDPE of extrusion grade, for example having a melt flow index (as determined in accordance with ASTM D1238, 190 °C/2.16 kg) of 2-13, such as 5-10, and a density (as determined in accordance with ISO 1183, method D) of 914-922 kg/m³, such as 915-920 kg/m³. In one aspect the laminate layer is a LDPE having a biobased carbon content of at least 50 % such as at least 70 % such as at least 80 % such as at least 90 % such as at least 95 %. In one aspect the laminate layer has a biobased carbon content of 100 %. The thickness of the laminate layer of the packaging material is between 5 µm-50 µm such as 10 µm-30 µm, such as 15 µm-30 µm, such as 17 µm - 25 µm.

The barrier layer, such as an oxygen barrier (e.g. aluminium foil) is arranged by help of the laminate layer on the side opposite the bulk layer. An adhesive is generally arranged on the barrier layer on the side to become the inside of the packaging container and the adhesive has a heat-sealable layer on the side opposite the laminate layer. Generally the different layers present in the packaging material are possible to detect for example by microscopy. It may not be possible to separate the adhesive from the heat-sealable layer, and thus in certain embodiments the layer forming the inside of the packaging container is a combination of the adhesive and the heat-sealable layer where the heat-sealable layer is facing the liquid or semi-liquid food product. The adhesive layer (i.e. not taken together with the heat-sealing layer) of the packaging material of the present invention has a thickness between 3 µm - 12 µm, such as 4 µm - 10 µm such as 5 µm - 9 µm. Suitable examples are ethylene acid copolymers such as ethylene acrylic acid copolymer, for example marketed under the tradename Nucrel® by Dupont.

According to aspects herein the packaging material contains an innermost layer of a heat-sealable polyolefin polymer which is applied as a layer to be directed towards the inside of the container, i.e. in direct food contact. The heat-sealable layer for the innermost layer may suitably be a polyethylene polymer of the low density type, selected from the group consisting of LDPE, LLDPE, VLDPE, ULDPE or mLLDPE and blends of two or more thereof. The arrangement of the heat-sealable layer is similar to the laminate layer and what was disclosed above in connection with the laminate layer applies also for the innermost layer. Depending on the type of packaging containers produced from the packaging material, also heat-sealable innermost layers of high density polyethylene, polypropylene or propylene co- or ter-polymers are conceivable within the scope of the invention as long as they are compatible with and achieve the desired effect in combination with other components of the packaging material and in particular the adhesive of the invention. Suitable examples to be used as innermost layers are blends between LDPE and mLLDPE (e.g. 50/50, 40/60, 60/40, 30/70, 70/30, 20/80, 80/20 weight% blend ratios), such as LDPE of extrusion grade, for example having a melt flow index (as determined in accordance with ASTM D1238, 190 °C/2.16 kg) of 2-12, such as 2-7, such as 2-5.5 and a density (as determined in accordance with ISO 1183, method D) of 914-922 kg/m³, such as 915-920 kg/m³. In one aspect the LDPE used as a blend component in the innermost layer is a LDPE having a biobased carbon content of at least 50 % such as at least 70 % such as at least 80 % such as at least 90 %. In one aspect the LDPE has a biobased carbon content of 100 %. Examples of mLLDPEs suitable according to the invention have a density less than 0.922 kg/cm³ and a melt flow index (MFI) of 15-25 at 190°C and 2.16 kg (ASTM 1278). Additional details are well known and within the capacity of the skilled person, additional understanding can be obtained for example in US6974612. In one aspect the mLLDPE used as a blend component in the innermost layer is a mLLDPE having a biobased carbon content of at least 50 % such as at least 70 % such as at least 80 % such as at least 90 %, such as at least 91 %, such as at least 92 %, such as at least 93 %, such as at least 94 %, such as at least 95 %. In one aspect the mLLDPE has a biobased carbon content of 100 %. The thickness of the innermost layer of the packaging material is between 5 µm-50 µm, such as 10 µm-30µm, such as 15 µm-30 µm, such as 17 µm - 25 µm. Naturally, the above referred examples are working as a general guidance and also other possible polymers are possible.

One embodiment relates to a packaging material comprised of a decor layer, a bulk layer, a laminate layer, a barrier layer, a heat-sealing layer wherein the decor layer is made of a blend conventional LDPE i.e. not from renewable raw material) and renewable LDPE wherein the biobased carbon content is at least 50 %, such as at least 60 %, at least 70 %, such as at least 80 %, such as at least 90 % such as at least 91 %, such as at least 92 %, such as at least 93 %, such as at least 94 %, such as at least 95 %. Alternatively the decor layer is made of LDPE having a biobased carbon content of 100 %.

One embodiment relates to a packaging material comprised of a decor layer, bulk layer, a laminate layer, a barrier layer, a heat-sealing layer wherein the laminate layer is made of a blend conventional LDPE (and LDPE having a biobased carbon content of at least 50 %, such as at least 60 %, at least 70 %, such as at least 80 %, such as at least 90 % such as at least 91 %, such as at least 92 %, such as at least 93 %, such as at least 94 %, such as at least 95 %. Alternatively the laminate layer is made of LDPE having a biobased carbon content of 100 %.

One embodiment relates to a packaging material comprised of a decor layer, bulk layer, a laminate layer, a barrier layer, a heat-sealing layer wherein the heat-sealing layer is made of a blend of LDPE and mLLDPE wherein LDPE is a blend of conventional LDPE and LDPE having a LDPE having a biobased carbon content of at least 50 %, such as at least 60 %, at least 70 %, such as at least 80 %, such as at least 90 %, such as at least 91 %, such as at least 92 %, such as at least 93 %, such as at least 94 %, such as at least 95 %. Alternatively the LDPE blended with the mLLDPE is made of LDPE having a biobased carbon content of 100 %.

One embodiment relates to the mLLDPE being made of mLLDPE having a biobased carbon content of at least 50 %, such as at least 60 %, at least 70 %, such as at least 80 %, such as at least 90 %, such as at least 91 %, such as at least 92 %, such as at least 93 %, such as at least 94 %, such as at least 95 %.

One embodiment relates to a packaging material comprised of a decor layer (11), bulk layer (12), a laminate layer (13), a barrier layer (14), a heat-sealing layer (16) wherein the heat-sealing is made of a blend conventional LDPE and LDPE having biobased carbon content of at least 50 %, such as at least 60 %, at least 70 %, such as at least 80 %, such as at least 90 % such as at least 91 %, such as at least 92 %, such as at least 93 %, such as at least 94 %, such as at least 95 %; and/or the laminate layer is made of a blend conventional LDPE and LDPE having a biobased carbon content of at least 50 %, such as at least 60 %, at least 70 %, such as at least 80 % such as at least 90 %, such as at least 91 %, such as at least 92 %, such as at least 93 %, such as at least 94 %, such as at least 95 %; and/or the heat-sealing layer is made of a blend of LDPE and mLLDPE wherein LDPE is a blend of conventional LDPE and LDPE having a biobased carbon content of at least 50 %, such as at least 60 %, at least 70 %, such as at least 80 % such as at least 90 %, such as at least 91 %, such as at least 92 %, such as at least 93 %, such as at least 94 %, such as at least 95 %. Alternatively one or more of the layers is made entirely from a polyolefin, such as LDPE and mLLDPE, having a biobased carbon content of 100 %. Optionally and adhesive layer (15) is present as between the barrier layer (14) and the heat-sealing layer (16).

In some embodiment of the present invention the LDPE is selected from the group consisting of SBC818 having a MFR of 8.1 g/10 min as determined according to ASTM 1238, a density of 0.918 g/cm³ as determined according to ASTM D1505; and a biobased content of about 95 % according to ASTM-D6866-12; SBC818R5 having a MFR of 8.1 g/10 min as determined according to ASTM 1238, a density of 0.918 g/cm³ as determined according to ASTM D1505; and a biobased content of about 45 % according to ASTM-D6866-12; and an LDPE (LDPE1) having a MFR of 8.3 g/10 min as determined according to ASTM 1238, a melt temperature of 107 °C as determined according to ASTM D 3418, a density of 0.918 g/cm³ as determined according to ASTM D1505; and a biobased content of about 50 % according to ASTM-D6866-12.

One embodiment relates to a packaging container prepared using a packaging material as described herein wherein the packaging container is a packaging container of the type Tetra Brik® Edge™ and has a biobased carbon content of 90 %.

One embodiment relates to a packaging container prepared using a packaging material as described herein wherein the packaging container is a packaging container of the type Tetra Rex ® and has a biobased carbon content of at least 80 %, such as at least 85 %, such as at least 90 %, such as at least 92 %, such as at least 93 %, such as at least 94 %, such as at least 95 %, such as at least 96 %, such as 100 %, i.e. the biobased carbon content relates to the packaging material as such. For packaging containers in need of less barrier, for example non-aseptic packaging container which are to be stored under chilled conditions the packaging material could be comprised of a decor layer on one side having a carton, paper or paperboard layer which on the side opposite the decor layer has a heat-sealing layer. The paperboard layer on the side opposite the decor layer may also have a barrier material such as polyamide or EvOH which on the side opposite the paperboard layer has a heat-sealable layer such as a LDPE. Accordingly one or more of the plastic layers may be from a renewable LDPE (i.e. having a biobased carbon content of at least 50 %) resulting in a package of as much as 100 % biobased content.

One embodiment relates to a packaging container prepared using a packaging material as described herein wherein the packaging container is a packaging container of the type Tetra Brik® and has a biobased carbon content of 90 %, i.e. the renewable content relates to the packaging material as such.

Non-limiting examples of the types of paperboard-based packages for liquid or semi-liquid food packaging are brick shaped packaging containers, gable top packaging container, wedged-shape packaging container, square-, rectangular- or octagonal-based packaging container having a slanted top. Some embodiments relates to packaging container selected from the group consisting of Tetra Brik® Aseptic, Tetra Brik® Edge™, Tetra Classic Aseptic, Tetra Fino® Aseptic, Tetra Evero® Aseptic, Tetra Gemina® Aseptic, Tetra Prisma® Aseptic, Tetra Wedge® Aseptic, Tetra Brik®, Tetra Recart® Tetra Rex® and Tetra Top®. The size of the packages can for example be size such as 200 ml, 250 ml, 500 ml and 1000 ml.

The packaging containers are generally produced by means of modern, high-speed packaging machines of the type that continuously form, fill and seal packages from a web or from prefabricated blanks of packaging material, e.g. Tetra Brik® Edge™ Aseptic- type packaging machines. Packaging containers may thus be produced by the so-called form-fill-seal technology basically including continuous reforming a web of the laminated packaging material by means of a filling machine which form, fill and seal the web into packages. Alternatively the packages may be formed using a blank which is unfolded, sealed at one end, filled and finally sealed, for example in a Tetra Rex-type packaging machine.

In a specific embodiments packaging containers of the type Tetra Brik® Edge™ 1000 ml where prepared from a packaging material comprising 12 g/m² decor of a LDPE1. The decor layer is arranged on the outside of the package. Additional layers from the decor layer are, 268 g/m² duplex paperboard , 20 g/m² LDPE1 laminate layer, about 6 µm aluminium foil, 6 g/m² adhesive (Primacor ™ 3440) and 19 g/m² heat-sealing layer of a blend of a LDPE1 (30 %) and a metallocene catalyzed linear, low density polyethylene. The resulting packaging material was determined to have a biobased carbon content of about 92 %.

In a specific embodiments packaging containers of the type Tetra Rex ® 1000 ml where prepared from a packaging material comprising 18 g/m² decor of a LDPE1. The decor layer is arranged on the outside of the package. Additional layers from the decor layer are, 253 g/m² duplex paperboard , 6 g/m² polyamide, and 50 g/m² heat-sealing layer of LDPE1. The resulting packaging material was determined to have a biobased carbon content of about 100 %.

The layers of the packaging material where unless otherwise indicated selected from materials described herein and above. The exact details are not necessary as long as the recommendations described herein are followed and naturally the same materials were used in the comparative study, except for the adhesive.

Generally above mentioned plastic layers of the packaging material are for example applied to the respective side of the bulk material by extrusion coating or film and foil lamination.

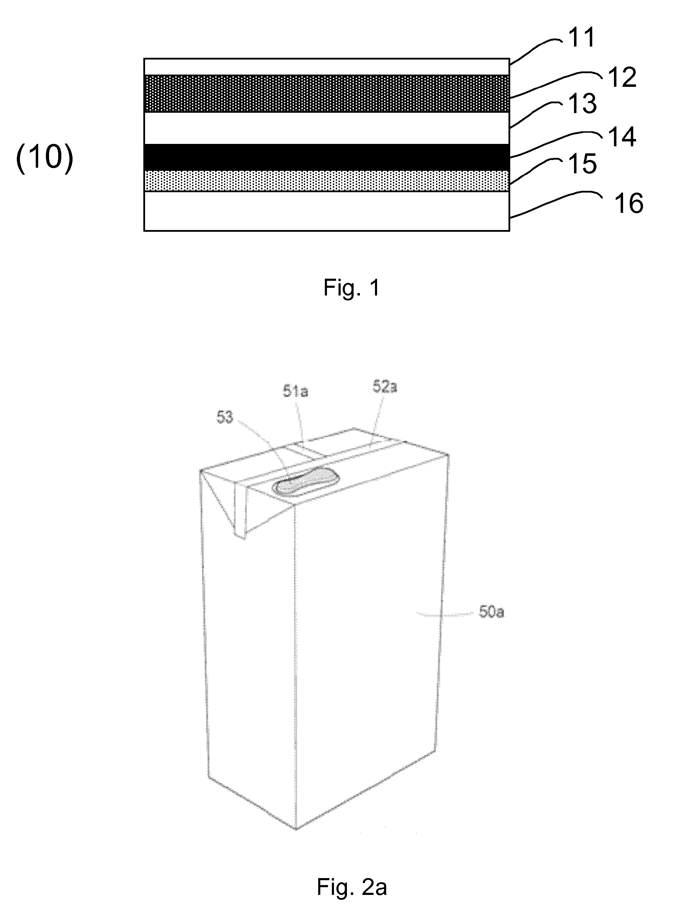

Fig. 2a shows an example of a packaging container 50 produced from the packaging material 20. The packaging container is particularly suitable for liquid or semi-liquid food products such as beverages, sauces, soups or the like. Typically, such a package has a volume of about 100 to 2000 ml. It may be of any configuration, but is for example brick-shaped, having longitudinal and transversal seals 51 and 52, respectively, and optionally an opening device 53. In another embodiment, not shown, the packaging container may be shaped as a wedge. In order to obtain such a "wedge-shape", only the bottom part of the package is fold formed such that the transversal heat-seal of the bottom is hidden under the triangular corner flaps, which are folded and sealed against the bottom of the package. The top section transversal seal is left unfolded. In this way the half-folded packaging container is still easy to handle and dimensionally stable (i.e. keeps form and shape) when put on a shelf in the food store or on a table or the like.

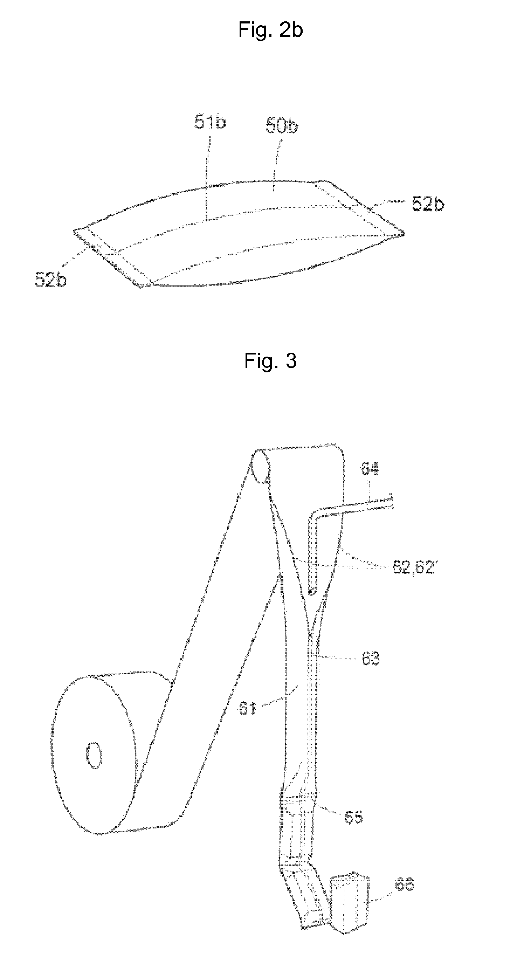

Fig. 2b shows an alternative example of a packaging container 50b produced from the packaging material 10b. Since the packaging material 20b may alternatively be thinner by having a thinner bulk layer, it will not be dimensionally stable enough to form a parallellepipedic or wedge-shaped packaging container, and is not fold formed after transversal sealing 52b. It will thus remain a pillow-shaped pouch-like container and distributed and sold in this shape.

Fig. 3 shows a principle of form-fill-seal technology as described herein, i.e. a web of packaging material is formed into a tube 61 by the longitudinal edges 62, 62' of the web being united to one another in an overlap heat-sealed joint 63. The tube is filled 64 with the intended liquid food product and is divided into individual packages by repeated transversal seals 65 of the tube at a pre-determined distance from one another below the level of the filled contents in the tube exclusively by way of example, and that modifications and alterations obvious to a person skilled in the art are possible without departing from the concept as disclosed in the appended claims.

A "polyolefin" or "polyalkene" is a polymer produced from a simple olefin of the formula C₂H₂ₙ as a monomer

A "polyethylene" is a polyolefin produced by polymerizing the monomer ethylene.

A "high density polyethylene" or "HDPE" is an ethylene polymer having a density of more than 0.941 g/cm³.

A "low density polyethylene" or "LDPE" is a polyethylene homopolymer having a density from 0.910 to 0.935 g/cm³. LDPE is also known as branched or heterogeneously branched polyethylene because of the relatively large number of long chain branches extending from the main polymer backbone. LDPE has been commercially manufactured since the 1930s and is well known in the art.

A "linear low density polyethylene" or "LLDPE" refer to a polyethylene copolymer having a density from 0.89 g/cm³. LLDPE is linear and does not substantially contain long chain branching, and has a narrower molecular weight distribution than conventional LDPE. The traditional "linear low density polyethylene" (LLDPE) can be produced with conventional Ziegler-Natta catalysts, vanadium catalysts. LLDPE has also been commercially manufactured for a long time (since the 1950s for solution reactors, and since the 1980s for gas phase reactors) and is also well known in the art.

A "mLLDPE" is a linear low density polyethylenes produced by metallocene catalysts in gas phase reactors and/or with metallocene catalysts in slurry reactors and/or with any of the haftocene catalysts in solution reactors. The mLLDPE are well known in the art of packaging technology.

A "green polyethylene" or "green PE" as used herein shall mean polyethylene of which is at least partially derived from materials that are identifiable by the presence of the radioisotope carbon-14 (¹⁴C). In analogy other terms such as "green LDPE" and "green mLLDPE" shall mean low density polyethylene and linear low density polyethylene which is at least partially derived from materials that are identifiable by the presence of the radioisotope carbon-14 (¹⁴C) respectively.

A "copolymer" or "heteropolymer" is a polymer of two or more monomeric species.

A "blank" means a pre-manufactured, flat folded tubular sheet of a packaging material, such as a packaging laminate comprising paper or paperboard and liquid tight plastic coatings on each side of the paper or paperboard. The blank is used to manufacture sealed packaging containers by erecting the blank to an open tubular sleeve which is transversally sealed in one end before filling and transversally sealing the open end.

A "cuboid" or a "cuboid shape" is in the context of the present application considered to have three pairs of rectangular phases. A suitable example in the field of packaging containers is the brick-shapes package, for example Tetra Brik® Aseptic.

A "thickness" referring to the packaging material, a packaging container or layers thereof is determined by microscopy, for example by a suitable microscope such as those marketed under the name Olympus, for example BX51.

"Liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, tea drinks, wine, soups, jalapenos, tomatoes, sauce (such as pasta sauce), beans and olive oil are some example of food products contemplated.

"Aseptic" in connection with a packaging material and packaging container refers to eliminate, in-activate or kill bacteria, spores and microorganisms. Generally an aseptic process is used when a product is aseptically packed in a packaging container.

The term "heat-sealing" refers to the process of sealing of a thermoplastic material with another. Thus a heat-sealable material should be able to generate a seal when put in contact with another suitable thermoplastic material under the appropriate conditions such as when applying sufficient energy. Suitable heating can be achieved by induction heating or ultrasonic heating or other heating sources.

"Biobased content" or "biobased carbon content" means the amount of biobased carbon in the material or product as a percent of the weight (mass) of the total organic carbon in the product.

## Claims

1. A packaging material for producing packaging containers for liquid or semi-liquid food wherein the packaging material comprises at least a decor layer (11), on one side having a bulk layer (12) which on the side opposite the decor layer (11) has a heat-sealing layer (16), wherein the packaging material has a biobased carbon content of at least 80 %.

2. The packaging material according to claim 1, wherein the biobased carbon content is at least 85 %, such as at least 90 % such as at least 95 %.

3. The packaging material according to any one of claims 1-2, additionally comprising a barrier layer (14) arranged between the bulk layer and the heat-sealing layer.

4. The packaging material according to claim 3, wherein additionally comprising a laminate layer (13) arranged between the barrier layer and the bulk layer.

5. The packaging material according to claim 3 or 4, additionally comprising an adhesive (15) arranged between the heat-sealing layer and the barrier layer.

6. The packaging material according to any one of claims 1-5, wherein one or more in the group consisting of decor layer, laminate layer and heat-sealing layer has a biobased carbon content of at least 50 % as determined in accordance with ASTM-D6866-12.

7. The packaging material according to claim 6, wherein the biobased carbon content is at least 60 %, or at least 70 %, or at least 80 %, or at least 90 %.

8. A packaging container made from a packaging material according to any one of claims 1-7.

9. The packaging container according to claim 8, wherein the container is selected from the group consisting of brick shaped packaging container; gable top packaging container; wedged-shape packaging container; square-, rectangular- or octagonal-based packaging container having a slanted top.

10. The packaging container according to any one of claims 8-9, wherein the container additionally comprises an opening device.

11. The packaging container according to claim 10 wherein the opening is an opening device having a biobased carbon content of at least 50 %, or at least 60 %, or at least 70 %, or at least 80 %, or at least 90 %.
